(19)

Europäisches
Patentamt

European
Patent Office

Office européen
des brevets

(11) **EP 4 550 683 A1**

(12) **EUROPEAN PATENT APPLICATION**

(43) Date of publication:
**07.05.2025 Bulletin 2025/19**

(21) Application number: **23207043.3**

(22) Date of filing: **31.10.2023**

(51) International Patent Classification (IPC):
**H04B 7/06** (2006.01)

(52) Cooperative Patent Classification (CPC):
**H04B 7/0639; H04B 7/0626; H04B 7/0695**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy 02610 Espoo (FI)**

(72) Inventors:
• QIU, Shuang
  **70469 Stuttgart (DE)**
• WU, Meng
  **89077 Ulm (DE)**

(74) Representative: **DREISS Patentanwälte PartG mbB Friedrichstraße 6 70174 Stuttgart (DE)**

(54) **SEMI-BLIND CHANNEL ESTIMATION**

(57)    Example embodiments of the present disclosure relate to a method, apparatus and computer readable storage medium for semi-blind channel estimation. In a method, an apparatus receives, from a further apparatus, precoding matrix indicator, PMI, feedback corresponding to a transmission from the apparatus to the further apparatus. The apparatus determines a spatial direction of the further apparatus based on the PMI feedback. The apparatus filters a received reference signal based on the spatial direction of the further apparatus, to filter out a portion of the received reference signal that is not received from the spatial direction of the further apparatus. The apparatus determines, based on the filtered received reference signal, estimated channel information about a channel from the further apparatus to the apparatus.

700

710
RECEIVE, FROM A FURTHER APPARATUS, PRECODING MATRIX INDICATOR, PMI, FEEDBACK CORRESPONDING TO A TRANSMISSION FROM THE APPARATUS TO THE FURTHER APPARATUS

720
DETERMINE A SPATIAL DIRECTION OF THE FURTHER APPARATUS BASED ON THE PMI FEEDBACK

730
FILTER A RECEIVED REFERENCE SIGNAL BASED ON THE SPATIAL DIRECTION OF THE FURTHER APPARATUS, TO FILTER OUT A PORTION OF THE RECEIVED REFERENCE SIGNAL THAT IS NOT RECEIVED FROM THE SPATIAL DIRECTION OF THE FURTHER APPARATUS

740
DETERMINE, BASED ON THE FILTERED RECEIVED REFERENCE SIGNAL, ESTIMATED CHANNEL INFORMATION ABOUT A CHANNEL FROM THE FURTHER APPARATUS TO THE APPARATUS

**FIG. 7**

EP 4 550 683 A1

**Description**

**FIELDS**

Various example embodiments of the present disclosure generally relate to the field of telecommunication and in particular, to a method, apparatus, and computer readable storage medium for semi-blind channel estimation.

**BACKGROUND**

Massive Multiple Input Multiple Output (MIMO) is considered as one of the most important technologies for the fifth and future generation wireless communication systems. To achieve high spectrum efficiency and high spatial multiplexing gain, precise channel state information (CSI) is required for signal processing at gNodeB (gNB). Pilot-based channel estimation (CE) may be the main method to obtain uplink (UL) CSI. However, this method has some bottlenecks for the performance of massive MIMO.

**SUMMARY**

In a first aspect of the present disclosure, there is provided an apparatus. The apparatus comprises at least one processor; and at least one memory storing instructions that, when executed by the at least one processor, cause the apparatus at least to perform: receiving, from a further apparatus, precoding matrix indicator, PMI, feedback corresponding to a transmission from the apparatus to the further apparatus; determining a spatial direction of the further apparatus based on the PMI feedback; filtering a received reference signal based on the spatial direction of the further apparatus, to filter out a portion of the received reference signal that is not received from the spatial direction of the further apparatus; and determining, based on the filtered received reference signal, estimated channel information about a channel from the further apparatus to the apparatus.

In a second aspect of the present disclosure, there is provided a method. The method comprises: receiving, at an apparatus and from a further apparatus, precoding matrix indicator, PMI, feedback corresponding to a transmission beamformed by the apparatus to the further apparatus; determining a spatial direction of the further apparatus based on the PMI feedback; filtering a received reference signal based on the spatial direction of the further apparatus, to filter out a portion of the received reference signal that is not received from the spatial direction of the further apparatus; and determining, based on the filtered received reference signal, estimated channel information about a channel from the further apparatus to the apparatus.

In a third aspect of the present disclosure, there is provided an apparatus. The apparatus comprises means for receiving, from a further apparatus, precoding matrix indicator, PMI, feedback corresponding to a transmission beamformed by the apparatus to the further apparatus; means for determining a spatial direction of the further apparatus based on the PMI feedback; means for filtering a received reference signal based on the spatial direction of the further apparatus, to filter out a portion of the received reference signal that is not received from the spatial direction of the further apparatus; and means for determining, based on the filtered received reference signal, estimated channel information about a channel from the further apparatus to the apparatus.

In a fourth aspect of the present disclosure, there is provided a computer readable medium. The computer readable medium comprises instructions stored thereon for causing an apparatus at least to perform a method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

**BRIEF DESCRIPTION OF THE DRAWINGS**

Some example embodiments will now be described with reference to the accompanying drawings, where:

FIG. 1 illustrates an example communication environment in which example embodiments of the present disclosure can be implemented;

FIGS. 2A and 2B illustrate flowcharts of example processes of channel status information (CSI) acquisition;

FIG. 3 illustrates a schematic diagram of a simplified communication environment in which example embodiments of the present disclosure can be implemented;

FIG. 4 illustrates a block diagram of apparatuses involved in semi-blind beam-domain CE in accordance with some example embodiments of the present disclosure;

FIG. 5 illustrates an example antenna array in accordance with some example embodiments of the present disclosure;

FIG. 6 illustrates a signaling diagram for an example communication process in the communication environment in accordance with some example embodiments of the present disclosure;

FIG. 7 shows a flowchart of an example method implemented at an apparatus in accordance with some example embodiments of the present disclosure;

FIG. 8 illustrates a simplified block diagram of a device that is suitable for implementing example embodiments of the present disclosure; and

FIG. 9 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As mentioned above, pilot-based CE is the main method to obtain uplink CSI. In addition, downlink CSI may be obtained via channel reciprocity in time-division duplexing (TDD) systems. The predefined pilot signal, namely sounding reference signal (SRS), is sent by a terminal device (e.g., UE) at a specific time and frequency. The methods to generate SRS signals have been introduced in communication specifications such as in 3GPP TS 38.211. The main idea is to guarantee the orthogonality between different SRS signals, such as configuring different comb offsets, different frequency-hopping pattern, cyclic-shift orthogonality, or the like. However, limited by the available time-frequency resources for SRS transmission, uplink SRS signals have to be reused between different cells, which results in pilot contamination (PC).

Pilot contamination has been identified as one of the key bottlenecks for the performance of massive MIMO systems. The way to mitigate pilot contamination is studied. One way to mitigate PC is pilot sequence assignment by coordinating the uplink SRS signals across network cells to limit the reuse of SRS signals by neighboring cells in a given area. However, as the increasing number of terminal devices in the network, pilot contamination cannot be fully avoided by pilot sequence assignment.

Another way to mitigate PC is blind detection by separating the subspace of desired channel and interfering channels. One example is to do singular value decomposition (SVD) to the UL received data at the gNB, the subspace spanned by the K eigenvectors corresponding to the K largest eigenvalues is considered the subspace of the desired channel, where K is the rank of the desired channel.

Methods related to blind detection do not need any information exchange between gNBs in the network. However, blind detection methods only work under the assumption that the desired channel is much stronger than interfering channels. However, based on field tests, this assumption does not always hold in practical systems. The interfering channels can be even stronger than the desired channel. One scenario is that a cell-edge target terminal device has larger large-scale fading than cell-edge users in the neighboring cells. In this case, blind detection methods cannot separate the subspaces of desired channel and interfering channels.

To overcome this problem, example embodiments of the present disclosure propose a solution for semi-blind beam-domain channel estimation (CE) with the assistance of precoding matrix indicator (PMI) feedback of a target device. With this solution, PMI feedback is received by an apparatus (for example, a network device), based on which a spatial direction of a further apparatus (for example, a terminal device) is determined by the apparatus. Then, the apparatus filters a received reference signal based on the spatial direction to filter out a portion of the received reference signal that is not received from the spatial direction. The apparatus determines estimated channel information for a channel from the further apparatus to the apparatus based on the filtered received reference signal.

Since PMI feedback is transmitted in such a way that it will not be impacted by pilot contamination, the impact of pilot contamination in a certain spatial may be mitigated using the PMI feedback. In some example embodiments, PMI feedback may be used to collect a priori information of the second-order statistics information of the desired channel. Then, the second-order statistics information may be used to determine the spatial direction of the target apparatus by projecting to a set of spatial orthogonal beams. Beams with higher projection power than a power threshold are selected and combined into a beam-domain receiver. The receiver works as a spatial filter to mitigate pilot contamination from the spatial direction of interfering apparatuses. In some example embodiments, the received data may be transformed into beam domain, which is helpful for denoising and improve CE accuracy due to the sparsity in beam domain.

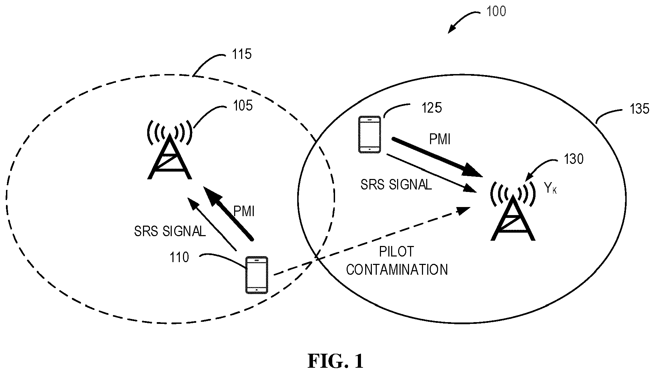

In the following, a scenario of pilot contamination will be discussed with reference to FIG. 1. FIG. 1 illustrates an example communication environment 100 in which example embodiments of the present disclosure can be implemented. As shown in FIG. 1, a terminal device 125 operates in a cell 135 of a network device 130. At the network device 130, in order to estimate a channel from the terminal device 125 to the network device 130, the terminal device 125 operating as a target device may transmit a reference SRS signal to the network device 130 within the cell 135. The cell 135 may be considered as a target cell. The purpose of the channel estimation is to acquire CSI of the desired channel.

In this scenario, there may be multiple cells around the cell 135 of the network device 130. For example, as shown in FIG. 1, a terminal device 110 operating within its cell 115 may also transmit an SRS signal to a network device 105 of the cell 115 for channel estimation. In many cases, limited by the available time-frequency resources for SRS transmission, UL SRS signals have to be reused between different cells (for example, the cell 135 and the cell 115, which results in pilot contamination. The terminal device 110 may be considered as an interfering terminal device for the terminal device 125, and the cell 115 may be considered as an interfering cell for the cell 135.

Here are some typical scenarios suffering from pilot contamination problem. For example, many users are scheduled at the same time and users in the neighboring cells must reuse pilot sequences. In addition, the scenario where interfering channels are stronger than the target terminal device can be the target terminal device is in cell-edge and with larger large-scale fading than the cell-edge users in the neighboring cells. For example, the target terminal device is inside a building, while the interfering cell-edge users are in open space.

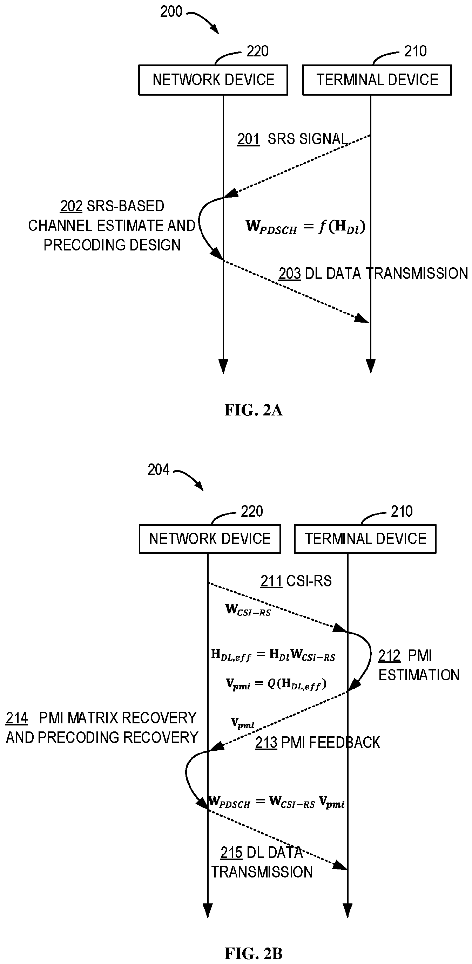

For CSI acquisition in massive MIMO systems, two ways to obtain CSI and their procedures will be discussed below with reference to FIG. 2A and FIG. 2B. FIG. 2A illustrates an example process 200 of SRS-based CSI acquisition. In this process, the CSI may be acquired through SRS-based CE. As shown in FIG. 2A, at step 201, a terminal device 210 may send uplink SRS signals periodically or aperiodically to a network device 220. Then, at step 202, the network device 220 may estimate SRS channel and design precoding to get the CSI. At step 203, the network device 220 may perform downlink data transmission to the terminal device 210. In this way, relatively more precise CSI may be obtained, but the accuracy can be impacted by pilot contamination.

FIG. 2B illustrates another example process 204 of CSI-RS-based CSI acquisition. In this process, two-stage CSI acquisition may be performed via feedback from the terminal device. As shown in FIG. 2B, in the first stage, at step 211, the network device 220 may send a P-port CSI-reference signal (CSI-RS) to the terminal device 210 (where P is the number of transmission ports at the network device 220 which may be less than the number of antennas). Then, at step 212, the terminal device 210 may estimate effective downlink channel based on CSI-RS and calculates CSI based on pre-defined codebooks. The CSI may include PMI, channel quality indicator (CQI) and rank indicator (RI). At step 213, the terminal device 210 feeds back measured CSI to the network device 220 on a physical uplink control channel (PUCCH) in a periodic, aperiodic or a semi-persistent method. Combining with CSI-RS beamformer and PMI, at step 214, the network device 220 may recover a precoding matrix containing the principal information of the DL channel. At step 215, the network device 220 may perform downlink data transmission to the terminal device 210.

Through the processes 200 and 204, it can be seen that in addition to the reference signal (e.g., SRS) for channel estimation at the network side, a terminal device may also transmit PMI feedback to the network device (as also illustrated in FIG. 1) in normal communication procedures with the network device.

Codebook designs for PMI is specified for communication devices according to the communication specifications. When uniform planar arrays are employed in massive MIMO systems, parameters $(O_1, O_2)$ decide the oversample rate of beams for horizontal and vertical dimension, respectively. Currently, Release 15 (R15) Type I is a widely-used codebook. The supported configurations of $(N_1, N_2)$ and $(O_1, O_2)$ are given in Table 1 as below. When the number of CSI-RS antennas ports is 8 and $(N_1, N_2)$ is configured as (2,2), the oversample rate can be (4,4) and the codebook can provide decent degree of freedom in spatial domain. When more CSI-RS ports and more advanced codebooks are configured, the accuracy of PMI may be further improved. Besides, with the increasing computational capabilities of the network device, more advanced CSI-RS beamformers and codebooks will be supported. Then, PMI will play a more important role in CSI acquisition for wireless MIMO systems.

Table 1: Supported configurations of $(N_1, N_2)$ and $(O_1, O_2)$

| Number of CSI-RS antenna ports, $P_{CSI-RS}$ | $(N_1, N_2)$ | $(O_1, O_2)$ |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

In example embodiments of the present disclosure, as mentioned above, PMI feedback is utilized to collect prior information of the desired channel to be estimated, which is used to detect the spatial direction of the target terminal device. The information about the spatial direction of the target device can then be used to process a received signal for channel estimation, to mitigate the pilot contamination suffered from signal transmissions by interfering terminal devices at other spatial directions. Example embodiments will be discussed in detailed below with reference to the accompanying figures.

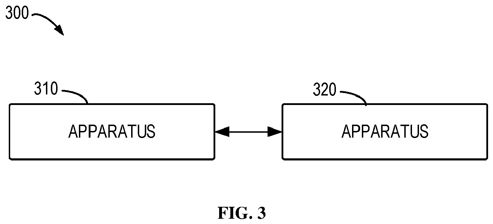

FIG. 3 illustrates an example communication environment 300 in which example embodiments of the present disclosure can be implemented. The communication environment 300 comprises an apparatus 310 and an apparatus 320. In some example embodiments, the apparatus 310 may operate as a network device, for example, a gNB. The apparatus 320 may operate as a terminal device (for example, a UE).

It is to be understood that the number and types of devices are shown in FIG. 3 for the purpose of illustration without suggesting any limitation. For example, the communication environment 300 may comprise any numbers of apparatuses.

In some example embodiments, a link from the apparatus 310 to the apparatus 320 may be referred to as a downlink (DL), and a link from the apparatus 320 to the apparatus 310 may be referred to as an uplink (UL). In DL, the apparatus 310 is a transmitting (TX) device (or a transmitter) and the apparatus 320 is a receiving (RX) device (or a receiver). In UL, the apparatus 320 is a TX device (or a transmitter) and the apparatus 310 is a RX device (or a receiver).

In the following, for the purpose of illustration, some example embodiments are described with the apparatus 320 operating as a terminal device, and the apparatus 310 operating as a network device. However, in some example embodiments, operations described with respect to a terminal device may be implemented at a network device or other devices, and operations described with respect to a network device may be implemented at a terminal device or other devices.

The apparatuses 310 and 320 can communicate with each other. Communications in the communication environment 300 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

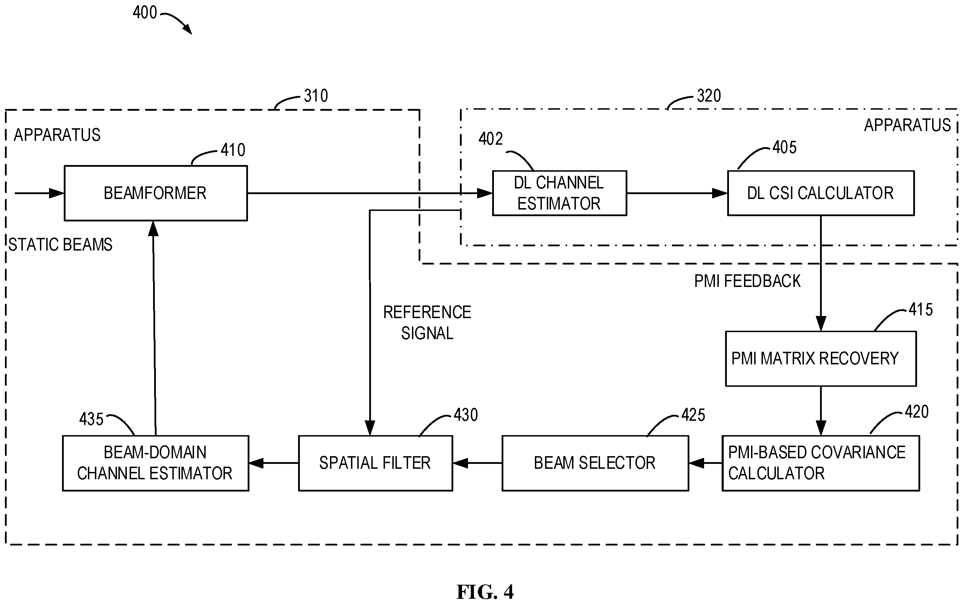

Some example implementations of the present disclosure will be described below with reference to FIG. 4. FIG. 4 illustrates a block diagram of the apparatuses 310 and 320 involved in semi-blind beam-domain CE in accordance with some example embodiments of the present disclosure. In this example, the apparatus 310 may operate as a network device and the apparatus 320 may operate as a terminal device operating in a serving cell of the apparatus 310. As illustrated, the apparatus 310 may include a beamformer 410, a PMI matrix recovery module 415, a PMI-based covariance calculator 420, a beam selector 425, a spatial filter 430, and a beam-domain channel estimator 435. The apparatus 320 includes a DL channel estimator 402 and a DL CSI calculator 405.

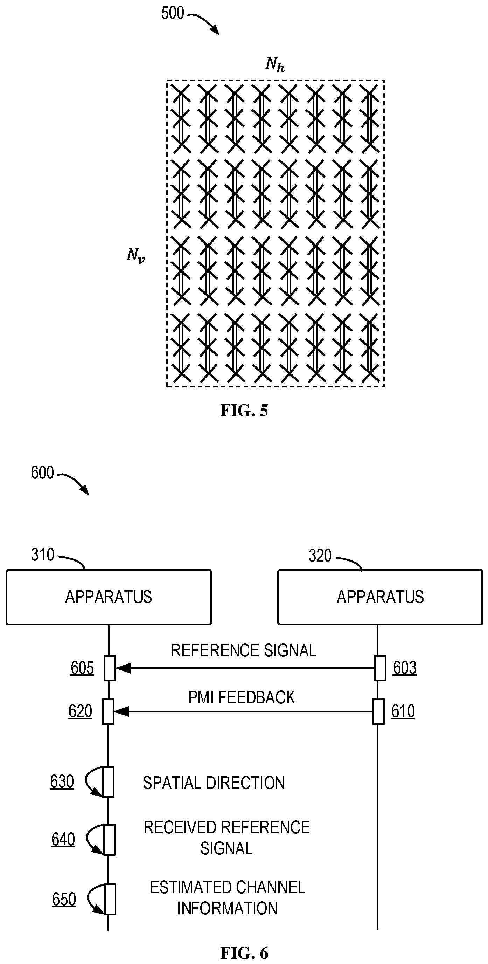

In some example embodiments, for the purpose of discussion, a MIMO system where the apparatuses 310 and 320 are located may be modeled in any suitable way. In an example, the MIMO system may be modeled as a wideband massive MIMO system, for example, with $K$ subcarriers and a cellular network with $L$ cells is considered. For simplification of notations, in this example, only one serving terminal device is considered in each cell and all the $L$ users in the network reuse the same UL SRS signal sequences. In each cell, the number of antennas for the network device and the terminal device are $N_t$ and $N_r$, respectively. It is assumed that the network device is equipped with a uniform planar antenna array with $N_v$ rows, $N_h$ columns and two polarizations, that is, $N_t = 2N_vN_h$. FIG. 5 illustrates an example antenna array 500 in accordance with some example embodiments of the present disclosure. As shown in FIG. 5, the antenna array 500 used in this example has $N_v$ rows, $N_h$ columns and two polarizations. Therefore, there are $2N_vN_h$ antenna elements in the antenna array 500.

In this example, the channel of the serving terminal device for transmitting a reference signal (i.e., a SRS signal) in the l-th cell is noted as $\mathbf{H}_{srs,l,k} \in C^{Nt \times Nr}$, $k = 1, .., K, l = 1, ..., L$. Then, the received signal by the network device on the k-th subcarrier is given by:

$$\mathbf{Y}_k = \sum_1^L \mathbf{H}_{srs,l,k}\mathbf{X}_k + \mathbf{N} \in C^{N_t \times L}, \qquad (1)$$

where $\mathbf{X}_k \in C^{Nr \times L}$ is the SRS signal sequence for the k-th subcarrier, the matrix $\mathbf{N} \in C^{Nt \times L}$ is the complex-valued addictive white Gaussian noise (AWGN), whose entries are independent and identically distributed with zero mean and unit variance.

It is assumed that the terminal device in the 1st cell is the target terminal device for channel estimation. When the least square (LS) CE method is used for the estimation of $\mathbf{H}_{srs,1,k}$, the estimated channel is given by:

$$\widehat{\mathbf{H}}_{srs,1,k} = \mathbf{H}_{srs,1,k} + \sum_{l \neq 1} \mathbf{H}_{srs,l,k} + \mathbf{N} \qquad (2)$$

When the power of the interfering channels is higher than $\mathbf{H}_{srs,1,k}$ (the desired channel), it is difficult for the network device in the 1st cell to determine the target channel and interfering channels. To overcome this problem, the network device needs some priori information of the target terminal device. Therefore, example embodiments of the present disclosure provides a semi-blind beam-domain CE solution with the assistance of PMI feedback of the target terminal device. In this method, PMI feedback can be used to collect a priori information of the second-order statistics information of the desired channel to be estimated. Then, the second-order statistics information is used to detect the direction of the target terminal device and spatially separate the target and interfering users.

As shown in FIG. 4, the DL channel estimator 402 of the apparatus 320 may receive a CSI-RS transmitted from a beamformer 410 of the apparatus 310, and may perform a channel estimation about the channel from the apparatus 310 to the apparatus 320.

In an example, PMI contains downlink CSI and can be used for UL CE in a TDD system due to channel reciprocity. Let $\mathbf{H}_{dl,l,k} \in C^{Nr \times Nt}$ denote the downlink channel of the terminal device in the $l$-th cell and the $k$-th subcarrier. Assume that the network device uses $N_p$ ports for CSI-RS transmission and $\mathbf{W}_{csi\text{-}rs,l} \in C^{Nt \times Np}$ is the beamformer for CSI-RS transmission in the 1-th cell. After the channel estimation, the downlink effective channel (also referred to as the estimated channel or estimated channel information) on the k-th subcarrier channel at terminal device is given by $\mathbf{H}_{dl,eff,l,k} = \mathbf{H}_{dl,l,k}\mathbf{W}_{csi\text{-}rs,l} \in C^{Nr \times Np}$.

Then, the DL CSI calculator 405 may calculate DL CSI including PMI feedback based on the estimated channel. For example, the DL CSI calculator 405 may calculate PMI based on $\mathbf{H}_{dl,eff,l,k}$ and pre-defined codebooks. The communication system may support wideband and subband PMI feedback indicated by a radio resource control (RRC) reconfiguration message. In the case where the subband PMI is configured, the DL CSI calculator 405 calculates a dedicated PMI for each subband, that is, $\mathbf{V}_{pmi,sb,s,l}$, $s = 1, ... S$, where s denotes the index of subband. Without loss of generality, subband PMI feedback is considered in the present disclosure although the PMI feedback may be performed in other ways.

The apparatus 320 (for example, the DL CSI calculator 405 of the apparatus 320) may determine the PMI and transmit PMI feedback corresponding to a transmission from the apparatus 310 to the apparatus 320 to the apparatus 310 (for example, the PMI matrix recovery module 415 of the apparatus 310). Correspondingly, the apparatus 310 may receive the PMI feedback from the apparatus 320.

Then, the apparatus 310 may recover a PMI matrix based on the PMI feedback received from the apparatus 320. In some example embodiments, the apparatus 310 may determine a two-stage precoding based on the PMI matrix and beamforming information applied at the apparatus 310. For example, the PMI matrix recovery module 415 of the apparatus 310 recovers the PMI matrix $\mathbf{V}_{pmi,sb,s,l} \in C^{Np \times L}$ and obtains a two-stage PMI precoding given as:

$$\mathbf{W}_{pmi,\text{sb},s,l} = \mathbf{V}_{pmi,\text{sb},l}^{H}\mathbf{W}_{csi-rs,l}^{\dagger} \tag{3}$$

$$\mathbf{W}_{csi-rs,l}^{\dagger} = \left( \mathbf{W}_{csi-rs,l}^{H}\mathbf{W}_{csi-rs,l} \right)^{-1}\mathbf{W}_{csi-rs,l}^{H}$$

where $\mathbf{Wi}_{pmi,\text{sb},s,l} \in C^{L \times Nt}$.

The apparatus 310 may determine a channel covariance matrix based on the PMI feedback. Here, a channel covariance matrix may also be referred to as a PMI-based covariance matrix. In some example embodiments, the apparatus 310 (for example, the PMI-based covariance calculator 420 of the apparatus 310) may determine the channel covariance matrix based on the aforementioned two-stage precoding, i.e., $\mathbf{W}_{pmi,\text{sb},s,l}$.

In some example embodiments, the apparatus 310 may determine the channel covariance matrix based on the PMI feedback and at least one historical PMI feedback received from the apparatus 320. The channel covariance matrix may be also referred to as the second-order statistics information.

For example, the PMI-based covariance calculator 420 may determine the channel covariance matrix based on the PMI feedback and at least one historical PMI feedback. The second-order statistics information in the $l$-th cell obtained by PMI feedback may be given by:

$$\mathbf{R}_{l,t} = \alpha\mathbf{R}_{l,t-1} + \frac{1-\alpha}{S}\sum_{s=1..S} \mathbf{W}_{pmi,\text{sb},s,l}^{H}\mathbf{W}_{pmi,\text{sb},s,l} \in C^{Nt \times Nt} \tag{4}$$

where $\alpha$ is the filter factor, which may be set as 0.1 or any other suitable value; t represents the index of PMI update; $\mathbf{R}_{l,t}$ represents the channel covariance matrix determined for the PMI feedback at the index of $t$, $\mathbf{R}_{l,t-1}$ represents the historical PMI feedback determined for the PMI feedback at the index of (t-1).

In some example embodiments, considering polarizations in the antenna array of the apparatus 310 and computational complexity reduction, the apparatus 310 may determine the channel covariance matrix by performing polarization-wise averaging on the PMI feedback based on the number of polarizations in an antenna array of the apparatus 310.

For example, the PMI-based covariance calculator 420 may determine the channel covariance matrix by performing the polarization-wise averaging on the PMI feedback. Assuming that the number of polarizations is two, the channel covariance matrix may be calculated by averaging over polarization, such as:

$$\overline{\mathbf{R}}_{l,t} = \alpha\overline{\mathbf{R}}_{l,t-1} + \frac{1-\alpha}{2S} \sum_{s=1..S} (\mathbf{W}^H_{pmi,sb,s,l,p1}\mathbf{W}_{pmi,sb,s,l,p1} \tag{5}$$

$$+ \mathbf{W}^H_{pmi,sb,s,l,p2}\mathbf{W}_{pmi,sb,s,l,p2}) \in C^{\frac{N_t}{2}\times\frac{N_t}{2}}$$

In Equation (5), the two polarization components are represented as

$$\mathbf{W}_{pmi,sb,s,l,p1} = \mathbf{W}_{pmi,sb,s,l}(:,1:\frac{N_t}{2}) \quad \text{and} \quad \mathbf{W}_{pmi,sb,s,l,p2} = \mathbf{W}_{pmi,sb,s,l}(:,1+\frac{N_t}{2}:N_t)$$

Then, the apparatus 310 determines a spatial direction of the apparatus 320 based on the PMI feedback. In some example embodiments, after determining the channel covariance matrix based on the PMI feedback, the apparatus 310 may project the channel covariance matrix into a set of spatial beams corresponding to an antenna array of the apparatus 310, to obtain respective projection powers of the set of spatial beams.

In some example embodiments, the set of spatial beams may be a set of spatial orthogonal beams. For example, the spatial direction of the target terminal device may be detected by performing orthogonal projection of the PMI-based covariance matrix to a set of spatial orthogonal beams.

For example, a set of orthogonal beams may be defined as a DFT matrix $\mathbf{W}_{DFT} \in C^{\frac{N_t}{2}\times\frac{N_t}{2}}$. Considering the uniform planar array, a DFT vector (also referred to as a DFT beam) $\mathbf{v}_{n,m}$ corresponding to the n-th row and the m-th column is given by:

$$\mathbf{u}_m = \begin{bmatrix} 1 & e^{j\frac{2\pi m}{N_h}} \dots & e^{j\frac{2\pi(N_h-1)}{N_h}} \end{bmatrix} \tag{6}$$

$$\mathbf{v}_{n,m} = \begin{bmatrix} \mathbf{u}_m & e^{j\frac{2\pi n}{N_v}}\mathbf{u}_m \dots & e^{j\frac{2\pi(N_v-1)}{N_v}}\mathbf{u}_m \end{bmatrix}^T \in C^{N_vN_h*1}$$

where $n = 1, \dots, N_v$, $m = 1, \dots, N_h$.

The projection power from the PMI-based covariance matrix to the DFT beam $\mathbf{v}_{n,m}$ in the 1-th cell may be given as:

$$P_{l,n,m} = \mathbf{v}^H_{n,m}\overline{\mathbf{R}}_{l,t}\mathbf{v}_{n,m} \tag{7}$$

Then, the apparatus 310 may determine the spatial direction of the apparatus 320 by selecting a subset of spatial beams from the set of spatial beams based on the respective projection powers. For example, the beam selector 425 may perform the selection of a subset of spatial beams from the set of spatial beams based on the respective projection powers of those spatial beams.

In some example embodiments, the apparatus 310 (for example, the beam selector 425 of the apparatus 310) may select, from the set of spatial beams, the subset of spatial beams with a sum of projection powers exceeding a threshold power. For example, after orthogonal projection, beams with higher projection power than a power threshold (also referred to as a threshold power) are considered consistent with the direction of the target channel. These beams should be selected and combined into a new matrix $\mathbf{W}_{DFT,\Psi,\Upsilon}$, to represent the spatial direction of the apparatus 320, which can be considered as a receiver in the target channel from the apparatus 320.

In some example embodiments, the threshold power may be determined as a threshold percentage of a total power of the respective projection powers of the set of spatial beams. For example, for beam selection, the beams which contribute to center amount of the total power are selected. The power on the remaining beams is considered as interference and noise. The metric may be given as:

$$B(\Psi, \Upsilon, N, M) = \sum_{n'\in\Psi, m'\in\Upsilon} P_{l,n',m'} > \alpha \sum_{n=1,\dots,N, m=1,\dots,M} P_{l,n,m} \tag{8}$$

where $B(\Psi, \Upsilon, N, M)$ represents the subset of spatial beams, $\Psi$, $\Upsilon$ are the sets containing the indices of the selected beams for row and column, and the sizes of $\Psi$, $\Upsilon$ are $N$ and M, respectively. The parameter $\alpha$ may be used to threshold the sum of projection powers of the selected beams. In an example, the parameter $\alpha$ may be set as 0.95, although any other suitable value can be set. Then, the new projection matrix $\mathbf{W}_{DFT,\Psi,\Upsilon} \in C^{NvNh \times NM}$ may be designed with the selected beams.

The apparatus 310 (for example, the spatial filter 430 of the apparatus 310) may filter a received reference signal based on the spatial direction of the apparatus 320, to filter out a portion of the received reference signal that is not received from the spatial direction of the apparatus 320. Specifically, the spatial filter 430 of the apparatus 310 obtains a received reference signal, e.g., a received SRS signal, which is received through the antenna array of the apparatus 310. The received reference signal may be transmitted by the apparatus 320, but may be contaminated by reference signal(s) from interfering terminal devices in other cells.

In some example embodiments, the spatial direction of the apparatus 320 may be represented as the subset of selected spatial beams with corresponding projection powers. The apparatus 310 may transform the received reference signal into a beam-domain, to obtain a beam-domain received reference signal. For example, the received reference signal $\mathbf{Y}_k \in C^{Nt \times L}$ at the apparatus 310 is considered as antenna-domain signal. By projecting $\mathbf{Y}_k$ to a matrix that is the beam-domain received reference signal, the antenna-domain received signal $\mathbf{W}_{DFT,\Psi,\Upsilon}$ can be transformed to a beam-domain received signal.

In some example embodiments, the apparatus 310 (for example, the spatial filter 430) may filter the beam-domain received reference signal based on the subset of selected spatial beams, to obtain the filtered received reference signal.

For example, the matrix $\mathbf{W}_{DFT,\Psi,\Upsilon}$ may work as a spatial filter which can filter out the interfering channels whose spatial directions are different from the target channel.

Then, the filtered received reference signal may be represented as:

$$\mathbf{Y}_{beam,k} = \begin{bmatrix} \mathbf{W}_{DFT,\Psi,\Upsilon}^H & 0 \\ 0 & \mathbf{W}_{DFT,\Psi,\Upsilon}^H \end{bmatrix} \mathbf{Y}_k \in C^{2MN \times L} \tag{9}$$

where $\mathbf{Y}_{beam,k} = [\mathbf{y}_{beam,1,k}\, \mathbf{y}_{beam,i,k} \cdots \mathbf{y}_{beam,L,k}]$, $\mathbf{y}_{beam,i,k} \in C^{2MN \times 1}$ denotes the i-th column of $\mathbf{Y}_{beam,k}$.

Then, the apparatus 310 (for example, the beam-domain channel estimator 435 of the apparatus 310) may determine, based on the filtered received reference signal, estimated channel information about a channel from the apparatus 320 to the apparatus 310.

In some example embodiments, the apparatus 310 may perform beam-domain channel estimation based on the filtered received reference signal, to determine the estimated channel information.

For example, LS channel estimation may be performed on $\mathbf{Y}_{beam,k}$. Since the beam-domain channel is sparser than the antenna-domain channel, the channel estimation accuracy may be improved than antenna-domain channel estimation. The computational complexity may be also reduced due to beam selection.

In the example embodiments of the present disclosure, a beam-domain receiver is designed, and interfering channels are filtered out by beam-domain receiver. The spatial direction of the target terminal device can be determined by executing orthogonal projection of the PMI-based second-order statistics to a set of orthogonal beams. Then, a beam selection metric is proposed to decide the reduced-dimension beam-domain receiver.

Furthermore, as beam-domain CE is carried out, with the beam-domain receiver, the received uplink signal is transformed to beam domain. Since antenna-to-beam domain transformation is helpful for denoising and beam-domain channel is sparser, SRS CE accuracy can be further improved. Besides, since the dimension of the beam-domain received signal is reduced due to beam selection, the computational complexity of CE is therefore reduced.

FIG. 6 illustrates a signaling diagram for an example communication process 600 in the communication environment 300 in accordance with some example embodiments of the present disclosure. The communication process 600 involves the apparatus 310 and the apparatus 320 in the communication environment 300.

As shown in FIG. 6, the apparatus 320 transmits (610), to the apparatus 310, PMI feedback corresponding to a transmission from the apparatus to the further apparatus. Accordingly, the apparatus 310 receives (620), from the apparatus 320, the PMI feedback. In some example embodiments, the apparatus 310 may further receive (605) a reference signal transmitted (603) by the apparatus 320.

The apparatus 310 determines (630) a spatial direction of the apparatus 320 based on the PMI feedback received from the apparatus 320. With the spatial direction of the apparatus 320, the apparatus 310 filters (640) a received reference signal based on the spatial direction of the further apparatus, to filter out a portion of the received reference signal that is not received from the spatial direction of the further apparatus. As a result, the pilot contamination is removed from the received reference signal. The apparatus 310 can thus determine (650), based on the filtered received reference signal, estimated channel information about a channel from the apparatus 320 to the apparatus 310.

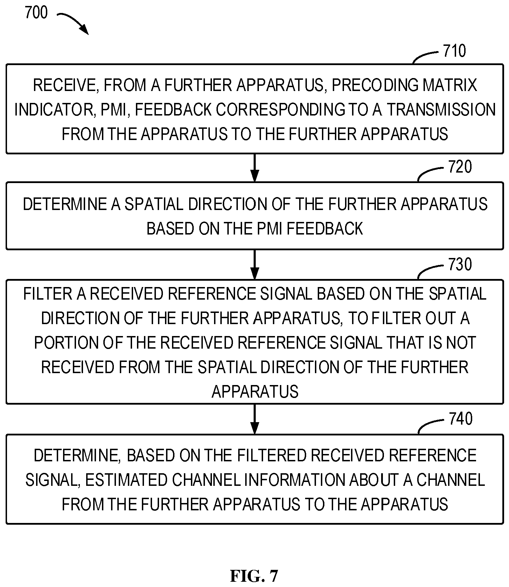

FIG. 7 shows a flowchart of an example method 700 implemented at an apparatus in accordance with some example embodiments of the present disclosure. For the purpose of discussion, the method 700 will be described from the perspective of the apparatus 310 in FIG.3.

At block 710, the apparatus 310 receives, from a further apparatus 320, precoding matrix indicator, PMI, feedback corresponding to a transmission from the apparatus to the further apparatus.

At block 720, the apparatus 310 determines a spatial direction of the further apparatus 320 based on the PMI feedback.

At block 730, the apparatus 310 filters a received reference signal based on the spatial direction of the further apparatus 320, to filter out a portion of the received reference signal that is not received from the spatial direction of the further apparatus 320.

At block 740, the apparatus 310 determines, based on the filtered received reference signal, estimated channel information about a channel from the further apparatus 320 to the apparatus 310.

In some example embodiments, the apparatus 310 may determine a channel covariance matrix based on the PMI feedback; project the channel covariance matrix into a set of spatial beams corresponding to an antenna array of the apparatus 310, to obtain respective projection powers of the set of spatial beams; and determine the spatial direction of the further apparatus by selecting a subset of spatial beams from the set of spatial beams based on the respective projection powers.

In some example embodiments, the set of spatial beams are a set of spatial orthogonal beams.

In some example embodiments, the spatial direction of the further apparatus 320 is represented as the subset of selected spatial beams with corresponding projection powers, and the apparatus 310 may transform the received reference signal into a beam-domain, to obtain a beam-domain received reference signal; and filter the beam-domain received reference signal based on the subset of selected spatial beams, to obtain the filtered received reference signal.

In some example embodiments, the apparatus 310 may perform beam-domain channel estimation based on the filtered received reference signal, to determine the estimated channel information.

In some example embodiments, the apparatus 310 may recover a PMI matrix based on the PMI feedback; determine a two-stage precoding based on the PMI matrix and beamforming information applied at the apparatus; and determine the channel covariance matrix based on the two-stage precoding.

In some example embodiments, the apparatus 310 may determine the channel covariance matrix based on the PMI feedback and at least one historical PMI feedback received from the further apparatus.

In some example embodiments, the apparatus 310 may determine the channel covariance matrix by performing polarization-wise averaging on the PMI feedback based on the number of polarizations in an antenna array of the apparatus.

In some example embodiments, the apparatus 310 may select, from the set of spatial beams, the subset of spatial beams with a sum of projection powers exceeding a threshold power.

In some example embodiments, the threshold power is determined as a threshold percentage of a total power of the respective projection powers of the set of spatial beams.

In some example embodiments, the apparatus 310 comprises a network device, and the further apparatus 320 comprises a terminal device.

In some example embodiments, an apparatus capable of performing any of the method 700 (for example, the apparatus 310 in FIG. 3) may comprise means for performing the respective operations of the method 700. The means may be implemented in any suitable form. For example, the means may be implemented in a circuitry or software module. The apparatus may be implemented as or included in the apparatus 310 in FIG. 3.

In some example embodiments, the apparatus comprises means for receiving, from a further apparatus, precoding matrix indicator, PMI, feedback corresponding to a transmission beamformed by the apparatus to the further apparatus; means for determining a spatial direction of the further apparatus based on the PMI feedback; means for filtering a received reference signal based on the spatial direction of the further apparatus, to filter out a portion of the received reference signal that is not received from the spatial direction of the further apparatus; and means for determining, based on the filtered received reference signal, estimated channel information about a channel from the further apparatus to the apparatus.

In some example embodiments, the apparatus comprises means for determining a channel covariance matrix based on the PMI feedback; means for projecting the channel covariance matrix into a set of spatial beams corresponding to an antenna array of the apparatus, to obtain respective projection powers of the set of spatial beams; and means for determining the spatial direction of the further apparatus by selecting a subset of spatial beams from the set of spatial beams based on the respective projection powers.

In some example embodiments, the set of spatial beams are a set of spatial orthogonal beams.

In some example embodiments, the spatial direction of the further apparatus is represented as the subset of selected spatial beams with corresponding projection powers, and the apparatus comprises means for transforming the received reference signal into a beam-domain, to obtain a beam-domain received reference signal; and means for filtering the beam-domain received reference signal based on the subset of selected spatial beams, to obtain the filtered received reference signal.

In some example embodiments, the apparatus comprises means for performing beam-domain channel estimation based on the filtered received reference signal, to determine the estimated channel information.

In some example embodiments, the apparatus comprises means for recovering a PMI matrix based on the PMI feedback; means for determining a two-stage precoding based on the PMI matrix and beamforming information applied at the apparatus; and means for determining the channel covariance matrix based on the two-stage precoding.

In some example embodiments, the apparatus comprises means for determining the channel covariance matrix based on the PMI feedback and at least one historical PMI feedback received from the further apparatus.

In some example embodiments, the apparatus comprises means for determining the channel covariance matrix by performing polarization-wise averaging on the PMI feedback based on the number of polarizations in an antenna array of the apparatus.

In some example embodiments, the apparatus comprises means for selecting, from the set of spatial beams, the subset of spatial beams with a sum of projection powers exceeding a threshold power.

In some example embodiments, the threshold power is determined as a threshold percentage of a total power of the respective projection powers of the set of spatial beams.

In some example embodiments, the apparatus comprises a network device, and the further apparatus comprises a terminal device.

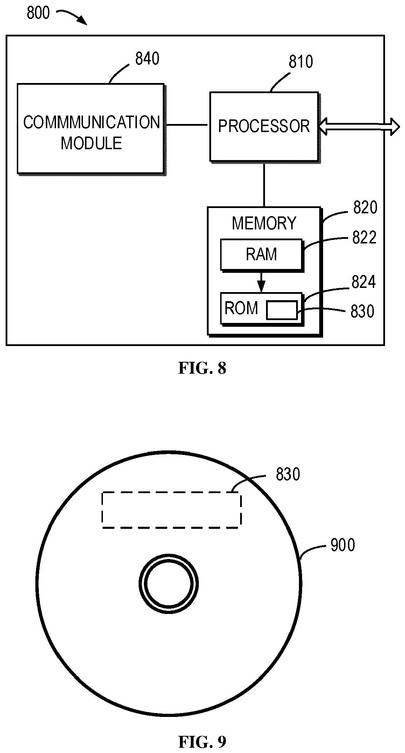

FIG. 8 is a simplified block diagram of a device 800 that is suitable for implementing example embodiments of the present disclosure. The device 800 may be provided to implement a communication device, for example, the apparatus 310 or the apparatus 320 as shown in FIG. 3. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 1 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 9 shows an example of the computer readable medium 900 which may be in form of CD, DVD or other optical storage disk. The computer readable medium 900 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. An apparatus (310, 800) comprising:

   at least one processor (810); and
   at least one memory (820) storing instructions that, when executed by the at least one processor (810), cause the apparatus (310, 800) at least to perform:

   receiving, from a further apparatus (320), precoding matrix indicator, PMI, feedback corresponding to a transmission from the apparatus to the further apparatus;
   determining a spatial direction of the further apparatus (320) based on the PMI feedback;
   filtering a received reference signal based on the spatial direction of the further apparatus (320), to filter out a portion of the received reference signal that is not received from the spatial direction of the further apparatus (320); and
   determining, based on the filtered received reference signal, estimated channel information about a channel from the further apparatus (320) to the apparatus (310).

2. The apparatus (310, 800) of claim 1, wherein the apparatus (310, 800) is caused to perform:

   determining a channel covariance matrix based on the PMI feedback;
   projecting the channel covariance matrix into a set of spatial beams corresponding to an antenna array of the apparatus (310, 800), to obtain respective projection powers of the set of spatial beams; and
   determining the spatial direction of the further apparatus by selecting a subset of spatial beams from the set of spatial beams based on the respective projection powers.

3. The apparatus (310, 800) of claim 2, wherein the set of spatial beams are a set of spatial orthogonal beams.

4. The apparatus (310, 800) of claim 2 or 3, wherein the spatial direction of the further apparatus (320) is represented as the subset of selected spatial beams with corresponding projection powers, and
   wherein the apparatus (310, 800) is caused to perform:

   transforming the received reference signal into a beam-domain, to obtain a beam-domain received reference signal; and
   filtering the beam-domain received reference signal based on the subset of selected spatial beams, to obtain the filtered received reference signal.

5. The apparatus (310, 800) of claim 4, wherein the apparatus (310, 800) is caused to perform:
   performing beam-domain channel estimation based on the filtered received reference signal, to determine the estimated channel information.

6. The apparatus (310, 800) of any of claims 2 to 5, wherein the apparatus (310, 800) is caused to perform:

   recovering a PMI matrix based on the PMI feedback;
   determining a two-stage precoding based on the PMI matrix and beamforming information applied at the apparatus; and
   determining the channel covariance matrix based on the two-stage precoding.

7. The apparatus (310, 800) of any of claims 2 to 6, wherein the apparatus (310, 800) is caused to perform:
   determining the channel covariance matrix based on the PMI feedback and at least one historical PMI feedback received from the further apparatus.

8. The apparatus (310, 800) of any of claims 2 to 7, wherein the apparatus (310, 800) is caused to perform:
   determining the channel covariance matrix by performing polarization-wise averaging on the PMI feedback based on the number of polarizations in an antenna array of the apparatus.

9. The apparatus (310, 800) of any of claims 2 to 8, wherein the apparatus (310, 800) is caused to perform:
   selecting, from the set of spatial beams, the subset of spatial beams with a sum of projection powers exceeding a threshold power.

10. The apparatus (310, 800) of claim 9, wherein the threshold power is determined as a threshold percentage of a total power of the respective projection powers of the set of spatial beams.

11. The apparatus (310, 800) of any of claims 1 to 10, wherein the apparatus (310, 800) comprises a network device, and the further apparatus (320) comprises a terminal device.

12. A method (700) comprising:

    receiving (710), at an apparatus and from a further apparatus, precoding matrix indicator, PMI, feedback corresponding to a transmission beamformed by the apparatus to the further apparatus;
    determining (720) a spatial direction of the further apparatus based on the PMI feedback;
    filtering (730) a received reference signal based on the spatial direction of the further apparatus, to filter out a portion of the received reference signal that is not received from the spatial direction of the further apparatus; and
    determining (740), based on the filtered received reference signal, estimated channel information about a channel from the further apparatus to the apparatus.

13. The method (700) of claim 12, wherein determining the spatial direction of the further apparatus comprises:

determining a channel covariance matrix based on the PMI feedback;
projecting the channel covariance matrix into a set of spatial beams corresponding to an antenna array of the apparatus, to obtain respective projection powers of the set of spatial beams; and
determining the spatial direction of the further apparatus by selecting a subset of spatial beams from the set of spatial beams based on the respective projection powers.

14. An apparatus (310) comprising

means for receiving, from a further apparatus (320), precoding matrix indicator, PMI, feedback corresponding to a transmission beamformed by the apparatus (310) to the further apparatus (320);
means for determining a spatial direction of the further apparatus (320) based on the PMI feedback;
means for filtering a received reference signal based on the spatial direction of the further apparatus (320), to filter out a portion of the received reference signal that is not received from the spatial direction of the further apparatus (320); and
means for determining, based on the filtered received reference signal, estimated channel information about a channel from the further apparatus to the apparatus (310).

15. A computer readable medium comprising instructions stored thereon for causing an apparatus (310, 800) at least to perform a method (700) according to any of claims 12 to 13.

**FIG. 1**

FIG. 2A

FIG. 2B

300

310

APPARATUS

320

APPARATUS

**FIG. 3**

**FIG. 4**

EP 4 550 683 A1

$500$ —

$N_h$

$N_v$

**FIG. 5**

$600$ —

| 310 — | 320 — |
|---|---|
| APPARATUS | APPARATUS |

REFERENCE SIGNAL

605 ◄──────────── 603

PMI FEEDBACK

620 ◄──────────── 610

630 ◗ SPATIAL DIRECTION

640 ◗ RECEIVED REFERENCE
SIGNAL

650 ◗ ESTIMATED CHANNEL
INFORMATION

**FIG. 6**

700

710

RECEIVE, FROM A FURTHER APPARATUS, PRECODING MATRIX INDICATOR, PMI, FEEDBACK CORRESPONDING TO A TRANSMISSION FROM THE APPARATUS TO THE FURTHER APPARATUS

720

DETERMINE A SPATIAL DIRECTION OF THE FURTHER APPARATUS BASED ON THE PMI FEEDBACK

730

FILTER A RECEIVED REFERENCE SIGNAL BASED ON THE SPATIAL DIRECTION OF THE FURTHER APPARATUS, TO FILTER OUT A PORTION OF THE RECEIVED REFERENCE SIGNAL THAT IS NOT RECEIVED FROM THE SPATIAL DIRECTION OF THE FURTHER APPARATUS

740

DETERMINE, BASED ON THE FILTERED RECEIVED REFERENCE SIGNAL, ESTIMATED CHANNEL INFORMATION ABOUT A CHANNEL FROM THE FURTHER APPARATUS TO THE APPARATUS

**FIG. 7**

800

840                                810

COMMMUNICATION
MODULE                          PROCESSOR

                                        820
                          MEMORY        822
                          RAM
                                        824
                          ROM           830

**FIG. 8**

830

900

**FIG. 9**

| | Europäisches Patentamt European Patent Office Office européen des brevets | **EUROPEAN SEARCH REPORT** | **Application Number** EP 23 20 7043 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/209385 A1 (TIDESTAV CLAES [SE] ET AL) 29 June 2023 (2023-06-29) | 1,11,12, 14,15 | INV. H04B7/06 |
| A | * paragraphs [0008], [0016], [0020], [0034]; figure 1 * | 2-10,13 | |
| X | WO 2018/009462 A1 (INTEL IP CORP [US]) 11 January 2018 (2018-01-11) | 1,11,12, 14,15 | |
| A | * paragraphs [0035], [0038], [0042] – [0045] * | 2-10,13 | |
| X | EP 3 443 794 B1 (HUAWEI TECH CO LTD [CN]) 3 March 2021 (2021-03-03) | 1,11,12, 14,15 | |
| A | * paragraphs [0069], [0070], [0071]; figure 3 * | 2-10,13 | |

| | | | TECHNICAL FIELDS SEARCHED (IPC) |
|---|---|---|---|
| | | | H04B |

The present search report has been drawn up for all claims

| Place of search | Date of completion of the search | Examiner |
|---|---|---|
| Munich | 8 April 2024 | Panahandeh, Ali |

EPO FORM 1503 03.82 (P04C01)

## ANNEX TO THE EUROPEAN SEARCH REPORT
## ON EUROPEAN PATENT APPLICATION NO.

EP 23 20 7043

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | Publication date | Patent family member(s) | Publication date |
|---|---|---|---|
| US 2023209385 A1 | 29-06-2023 | EP 4162616 A1 | 12-04-2023 |
| | | US 2023209385 A1 | 29-06-2023 |
| | | WO 2021251855 A1 | 16-12-2021 |
| WO 2018009462 A1 | 11-01-2018 | NONE | |
| EP 3443794 B1 | 03-03-2021 | AU 2017255475 A1 | 22-11-2018 |
| | | CN 109076551 A | 21-12-2018 |
| | | EP 3443794 A1 | 20-02-2019 |
| | | JP 6912498 B2 | 04-08-2021 |
| | | JP 7359808 B2 | 11-10-2023 |
| | | JP 2019521543 A | 25-07-2019 |
| | | JP 2021177642 A | 11-11-2021 |
| | | KR 20180137552 A | 27-12-2018 |
| | | RU 2712127 C1 | 24-01-2020 |
| | | US 2017317866 A1 | 02-11-2017 |
| | | US 2023081802 A1 | 16-03-2023 |
| | | WO 2017185979 A1 | 02-11-2017 |

EPO FORM P0459

For more details about this annex : see Official Journal of the European Patent Office, No. 12/82